# EUROPEAN PATENT SPECIFICATION

(11) **EP 4 468 684 B1**
(45) Date of publication and mention of the grant of the patent: **17.12.2025**
(21) Application number: 23305813.0
(22) Date of filing: 23.05.2023
(51) Int. Cl.: H04L 67/12, H04L 12/40

(54) **MODBUS MASTER MONITORING**
MODBUS-MASTERÜBERWACHUNG
SURVEILLANCE MAÎTRE DE MODBUS

(43) Date of publication of application: 27.11.2024
(73) Proprietor: SCHNEIDER ELECTRIC INDUSTRIES SAS, 92500 Rueil-Malmaison (FR)
(72) Inventor: GORISSE, François, 06250 Mougins (FR); CANEPA, Lorenzo, 06600 Antibes (FR); O'BOYLE, James, New Boston, 03070 (US)
(74) Representative: Schneider Electric

(56) References cited:
- CN-A- 110 545 226
- CN-A- 114 745 221

## Description

### FIELD OF INVENTION

The present invention generally relates to industrial automation systems, and more particularly relates to a control device implementing a Modbus server and communicating with controllers implementing Modbus clients that may act as Modbus master according to TCP Modbus protocol.

### BACKGROUND

The term IP (Internet Protocol) network will be used hereinafter to denote a communication network of Internet (Intranet or Extranet) type in accordance with the TCP/IP (Transport Communication Protocol/Internet Protocol) standard. Modbus is a messaging protocol that is commonly used in automation equipment architectures (http://www.modbus.org/). An IP network may convey messages in accordance with the Modbus/TCP communication protocol. Modbus/TCP is a communication protocol that makes it possible to exchange frames in accordance with the Modbus protocol for the application layer (layer 7) of the ISO (International Standards Organization) model, and to convey these Modbus frames on an Ethernet network using the ISO layers of the TCP/IP standard of the Internet.

In the remainder of the present document, the term " Modbus network" defines a Modbus link using a communication protocol that makes it possible to exchange frames in accordance with the Modbus protocol and to convey these Modbus frames on a multipoint link.

Nowadays the Modbus protocol does not describe any process for a Modbus server to implement an efficient monitoring of a Modbus client acting as Modbus master to implement the fallback of outputs.

Prior art document CN114745221A discloses at least two Modbus SCTP paths are established between the first Modbus client and the Modbus server through handshake for improving reliability of Modbus communications.

A control device managing outputs of a set of Input/Output modules, fallback mechanism of these outputs and implementing a Modbus server acting as a Modbus slave needs to monitor a Modbus client acting as a Modbus master in order to position the outputs in fallback when communication stops after a configurable time. To overcome this problem, an application can provide a configuration screen which allows storing master addresses (IP) and which allows setting the maximum time to determine that the master has disappeared. A reservation time can be configured, guarantying to the master that no other master can take the reservation of the island during this period.

A drawback of this configuration is that all information must be configured and if the address of the master changes, it is necessary to reconfigure all the previous information. If the configuration is not centralized, it is necessary to use dedicated application for each impacted control device. If the configuration is centralized, it is necessary to retrieve the configuration screen for each impacted control device. In each case, the configuration must be set and ensured for proper operation.

There is therefore a need for a control device for supporting efficiently monitoring of masters to implement the fallback of outputs.

### SUMMARY

This summary is provided to introduce concepts related to the present inventive subject matter. This summary is not intended to identify essential features of the claimed subject matter nor is it intended for use in determining or limiting the scope of the claimed subject matter.

In one implementation, there is provided a control device for managing outputs of a set of Input/Output modules and implementing a Modbus server communicating according to a Modbus TCP/IP communication protocol with Modbus clients, comprising:
a network interface configured to receive requests for commanding one or more outputs from the Modbus clients,
a storage unit configured to store, for each request received from a Modbus client, an IP address of the Modbus client and a number of requests received from said Modbus client,
a processing unit configured to determine a Modbus client as Modbus master for said one or more outputs when the frequency of requests commanding said one or more outputs, received from said Modbus client, is above a threshold.

Advantageously, the control device is able to detect automatically the Modbus master knowing the request sending frequency of the Modbus master and the IP address of the Modbus master.

In an embodiment, the processing unit is configured to switch the Modbus server in fallback mode for managing said one or more outputs when the Modbus server has not received any request during a communication time interval from the Modbus master.

The control device allows an automatic detection of a Modbus master among the different Modbus clients and an automatic monitoring of the Modbus master for the fallback management of the outputs. It provides an easy and efficient way in multi-masters mode to detect missing Modbus masters and to manage independently the fallback of outputs covered by different Modbus masters.

In an embodiment, the processing unit is configured to determine the communication time interval depending on the estimated frequency and a minimal number of requests.

In an embodiment, the frequency is estimated after a minimal number of requests is received from the Modbus client before the end of a defined time interval.

In an embodiment, the communication time interval corresponds to the period during which said minimal number of requests has been received.

In an embodiment, the communication time interval is updated after a defined period or regularly.

In an embodiment, the threshold depends on the minimal number of requests to be received from the Modbus client during a defined time interval.

In an embodiment, the Modbus server in fallback mode allows the processing unit to apply a fallback strategy according to which it can manage itself the outputs, without receiving other requests.

In an embodiment, the processing unit is further configured to monitor the outputs covered by the requests, and to assign an identifier of a Modbus client to an identifier of an output, when the Modbus client is determined as Modbus master for this output.

In an embodiment, the Modbus server is configured to receive requests from a Modbus client through a dedicated socket and to assign a range of outputs to said dedicated socket.

In an embodiment, a Modbus client is determined as Modbus master for all outputs when the frequency of requests commanding said one or more output received from said Modbus client is higher than the frequency of requests commanding said one or more output received from other Modbus clients.

In an embodiment, once a Modbus client has been determined as Modbus master for one or more outputs, the processing unit PU provides an access to the Modbus client to a table listing the IP address of the Modbus client, the number of requests received from said Modbus client and a Master tag linked to the identifiers of the outputs covered by the requests.

Advantageously, the control device can retrieve the current connection status, so it is possible for the Modbus master to check if the control device is well configured.

In another implementation there is provided a method implemented in a control device managing outputs of a set of Input/Output modules and implementing a Modbus server communicating according to a Modbus TCP/IP communication protocol with Modbus clients, the method comprising:
receiving requests for commanding one or more outputs from the Modbus clients, storing, for each request received from a Modbus client, an IP address of the Modbus client and the number of requests received from said Modbus client,
determining a Modbus client as Modbus master for said one or more outputs when the frequency of requests commanding said one or more outputs, received from said Modbus client, is above a threshold.

In an embodiment, the method further comprises switching the Modbus server in fallback mode for managing said one or more outputs when the Modbus server has not received any request during a communication time interval from the Modbus master.

In another implementation there is provided a computer-readable medium having embodied thereon a computer program for executing a method for managing outputs of a set of Input/Output modules and implementing a Modbus server communicating according to a Modbus TCP/IP communication protocol with Modbus clients. Said computer program comprises instructions which carry out steps according to the method according to the invention.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
FIG. 1 shows a schematic block diagram of a communication system according to one embodiment of the invention for managing outputs of a set of Input/Output modules; and
FIG. 2 shows a flow chart illustrating a method for managing outputs of a set of Input/Output modules according to one embodiment of the invention.

The same reference number represents the same element or the same type of element on all drawings.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

In one embodiment, a standalone I/O island is connected to a controller CNT like a programmable logic controller PLC with a fieldbus like Ethernet/IP and contains a head driving clusters of I/O modules respectively through controllers. A cluster is a set of I/O modules physically linked together through a backplane and an I/O module is a usual automation module converting electrical signals to digital values. In a cluster, the cluster manager and different modules can communicate by means of their respective switches through a multipoint communication line.

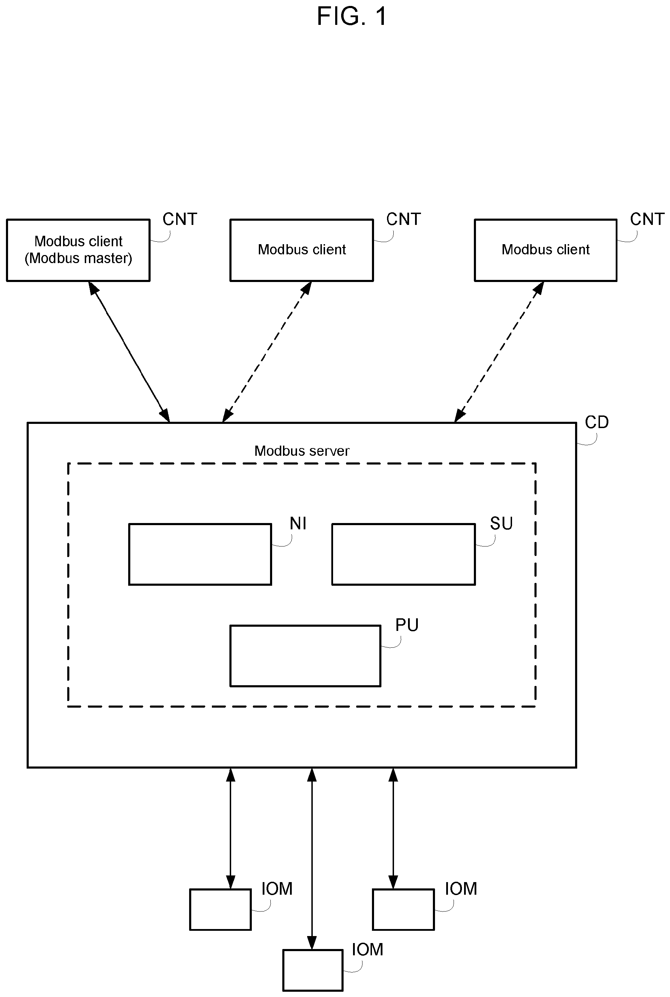

Referring to FIG. 1, an industrial communication system comprises a control device CD, a set of I/O modules IOM, and a set of controllers CNT.

The control device CD is able to manage communication with a set of I/O modules IOM, via a multipoint communication line - for example, a multipoint low voltage differential signaling (MLVDS) bus - or directly if the I/O modules are included in the control device CD, and optionally with another control device via Ethernet and CAN (Controller Area Network) bus. The control device CD is driven by a head that can drive other control devices. In one embodiment, the control device CD is included in the head.

The control device CD implements a Modbus server communicating with Modbus clients implemented in controllers CNT, that are for example programmable logic controllers. Furthermore, the Modbus server is acting as a Modbus slave receiving requests from one or more Modbus masters. It is assumed that a Modbus master initiates all communication transactions towards a Modbus slave, wherein a Modbus slave has a unique identity and responds to a Modbus master only when addressed by the Modbus master. Furthermore, a Modbus client that is acting as a Modbus master can send any kind of requests, including to requests to command (e.g. write) outputs, whereas Modbus client that is not acting as a Modbus master can send requests to read outputs but does not send request to command outputs.

An I/O module IOM can include Analog to Digital Converter (ADC) and Digital to Analog Converter (DAC) for connecting to sensors and actuators, communications modules, digital inputs and outputs, relays, and more. An I/O module communicates with the control device CD through the communication bus with adapted packet formats.

The control device CD comprises a network interface NI configured to receive requests from the Modbus clients.

The control device CD comprises a storage unit SU configured to store, for each received request, an IP address associated with the Modbus client having sent said request.

In one embodiment, the requests from one Modbus client are received on one or more specific sockets of the Modbus server. The Modbus server can thus monitor the number of requests received on said one or more specific sockets. By analyzing the content of a request, the Modbus server can extract the IP address of the Modbus client having sent the request and the output covered by the request. The request designates an address of an output to command (to write) and this address may be associated with an identifier of the output. To that end, the control device may use an area coverage auto-discovery. For example, the identifier of the output can correspond to an address of the output or a range of addresses of outputs.

The Modbus server can thus create a table listing the IP address of a Modbus client, the number of requests received from this Modbus client, a timestamp of each request received from this Modbus client and optionally the identifiers of the outputs covered by the requests.

The control device CD comprises a processing unit PU configured to determine a Modbus client as Modbus master when the frequency of requests received from said Modbus client is above a threshold.

In one embodiment, the frequency is estimated for a Modbus client only if a minimal number of requests is received during a defined time interval. The frequency can be estimated at any time, like at commissioning time or in operation.

For example, after a minimal number (for example 4) of requests received from a Modbus client, the frequency of requests is estimated by means of the corresponding timestamps.

If not enough requests are received from a Modbus client, the frequency of these requests is not estimated.

In a first embodiment, the control device CD is in a single master mode, meaning the control device CD is connected to only one Modbus client and it can accept one single Modbus master managing the outputs.

In one embodiment, a Modbus client is determined as Modbus master when the frequency of requests received from said Modbus client is above a threshold, after having received a minimal number of requests from the Modbus client. In one example, the minimal number of requests is at least 4.

The threshold depends on the minimal number of requests to be received from the Modbus client during a defined time interval. This minimal number of request and the defined time interval may be initially configured by administrator, for example depending on the Modbus server requirements.

Once the Modbus client has been determined as Modbus master, the Modbus server can then update the table listing the IP address of said Modbus client and the number of requests received from said Modbus client with a Master tag linked to the identifiers of the outputs covered by the requests.

The processing unit PU is configured to determine, once the Modbus client has been determined as Modbus master, a communication time interval at the end of which the Modbus server switches in fallback mode for managing the outputs when the Modbus server has not received any request from the Modbus master during said communication time interval.

The communication time interval depends on the estimated frequency and on the minimal number of requests. In one embodiment, the communication time interval is updated after a defined period or regularly. For example, if said minimal number of requests is received in a shorter time interval, the communication time interval becomes equal to said shorter time interval.

The communication time interval is defined as a hold-up time allowing to detect if the Modbus master has disappeared during this time (no requests received).

According to one illustrative example, the communication time interval depends on the estimated frequency of requests and the minimal number of requests used to estimate the frequency. For example, the minimal number of requests is 4 to be received during a defined time interval of 1s. If 4 requests are received in 500ms, the estimated frequency is 8 per second and the communication time interval is 500ms.

When the Modbus server switches in fallback mode for managing the outputs, the Modbus server applies a fallback strategy according to which it can manage itself the outputs, without receiving other requests. In one example, the Modbus server assigns a default value to each of the outputs. In another example, the Modbus server keeps the current values of the outputs, or assigns one or more specific values before assigning the default values to the outputs.

In a second embodiment, the control device CD is in a multi master mode, meaning the control device CD is connected to different controllers CNT implement Modbus clients and it can accept different Modbus masters (corresponding to all or part of the Modbus clients) managing respecting outputs (one output should be managed by one Modbus master).

In one embodiment, a Modbus client is determined as Modbus master for one or more outputs when the frequency of requests commanding said one or more outputs received from said Modbus client is above a threshold, after having received a minimal number of requests from the Modbus client. Some Modbus clients may not be determined as Modbus master.

In another embodiment with an exclusive mode, only one Modbus client is determined as Modbus master for all outputs when the frequency of requests commanding any output received from said Modbus client is higher than the frequency of requests commanding any output received from other Modbus clients.

The exclusive mode can be used when an administrator has to be sure that other Modbus masters do not interfere due to a mistake. In that case, a reservation time can be defined, allowing only the current Modbus master to manage the outputs: other Modbus masters cannot manage any output while the current Modbus master is acting and until it stops acting for the reservation time.

According to previous embodiments in the multi master mode, the processing unit PU is also configured to determine, once the Modbus client has been determined as Modbus master for one or more outputs, a communication time interval at the end of which the Modbus server switches in fallback mode for managing said for one or more outputs when the Modbus server has not received any request from the Modbus master during said communication time interval.

In one embodiment, the processing unit PU provides an access to the table listing in correspondence: for each Modbus client identified as Modbus master, the IP address of the Modbus client and the number of requests received from said Modbus client and the Master tag linked to the identifiers of the outputs covered by the requests.

The Modbus master can then check the content of this table to confirm that it is acting as Modbus master for said outputs covered by the requests. If there is a mismatch between the table and the actual role of the Modbus master, this latter can raise an alarm to the control device.

In one embodiment, the processing unit PU is further configured to define a holdup time for a set of outputs, the holdup time corresponding to the time delay the set of outputs holds its current state without receiving a new request from the Modbus master managing said set of outputs.

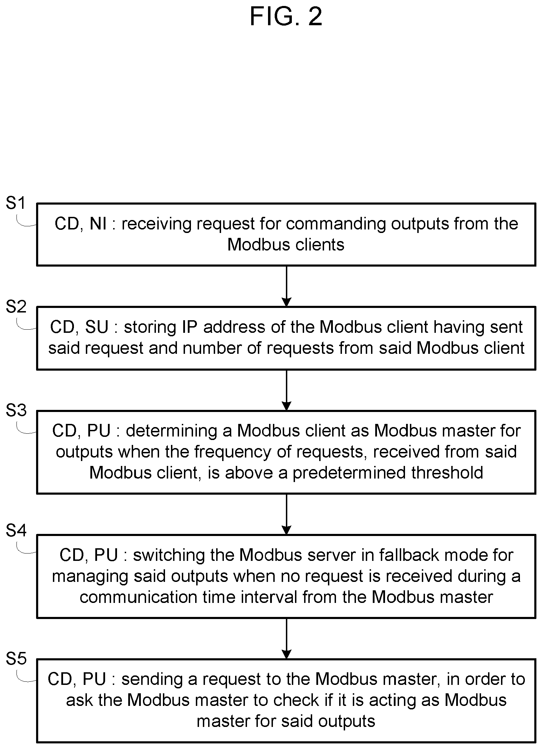

With reference to FIG. 2, a method for managing outputs of a set of Input/Output modules according to one embodiment of the invention comprises steps S1 to S5.

Initially, the control device CD managing outputs of a set of Input/Output modules implements a Modbus server communicating according to a Modbus TCP/IP communication protocol with one or more Modbus clients, without having preconfigured any Modbus client as a Modbus master.

In step S1, the network interface NI of the control device CD receives requests for commanding outputs from the Modbus clients.

In step S2, the control device CD stores in the storage unit SU, for each received request, an IP address of the Modbus client having sent said request and the number of requests received from said Modbus client, for example by incrementing a counter, and identifiers of the outputs covered by the request.

For each Modbus client, the processing unit PU creates a table listing at least the IP address of the Modbus client, the number of requests received from said Modbus client, and the frequency of requests received from the Modbus.

In step S3, the processing unit PU of the control device CD determines a Modbus client as Modbus master for one or more outputs when the frequency of requests, received from said Modbus client, commanding said one or more outputs is above a threshold.

The processing unit PU updates the table listing the IP address of said Modbus client with a Master tag linked to the identifiers of the outputs covered by the requests.

The frequency is estimated after a minimal number of requests is received from the Modbus client before the end of a defined time interval.

The processing unit PU calculates a communication time interval depending on the estimated frequency and said minimal number of requests. The communication time interval should correspond to the period during which said minimal number of requests has been received (between the first and the last request of said minimal number of requests).

In one embodiment, when there are different Modbus clients connected to the Modbus server, at least some of these different Modbus clients can become Modbus master for different outputs, according to the same principle. It is assumed that a range of outputs is assigned to each socket dedicated to a Modbus client, in order to distinguish the outputs covered by the requests.

In one embodiment with an exclusive master mode, only one Modbus client among the different Modbus clients is determined as Modbus master for all outputs when the frequency of requests received from said only one Modbus client is higher than the frequency of requests received from the other Modbus clients.

In one embodiment, the processing unit PU defines identifiers of output, like addresses of output, and identifiers of Modbus client in order to assign an identifier of a Modbus client to an identifier of an output, when the Modbus client is determined as Modbus master for this output.

In step S4, when the Modbus server has not received any request during a communication time interval from the Modbus master for one or more outputs, the processing unit PU is configured to switch the Modbus server in fallback mode for managing said one or more outputs.

The communication time interval corresponds to the period during which a minimal number of requests for commanding said one or more outputs has been received from said Modbus master, as calculated in step S3.

In step S5, once a Modbus client has been determined as Modbus master for one or more outputs, the processing unit PU provides an access to the Modbus client to a table listing the **IP** address of the Modbus client, the number of requests received from said Modbus client and a Master tag linked to the identifiers of the outputs covered by the requests. The processing unit PU may receive a request from the Modbus master, in order that the Modbus master checks if it is acting as Modbus master for said one or more outputs.

The Modbus master can raise an alarm if it detects that it is not the correct Modbus master for the outputs covered by its requests.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

Furthermore, although exemplary embodiments have been described above in some exemplary combination of components and/or functions, it should be appreciated that, alternative embodiments may be provided by different combinations of members and/or functions without departing from the scope of the present disclosure. In addition, it is specifically contemplated that a particular feature described, either individually or as part of an embodiment, can be combined with other individually described features, or parts of other embodiments

## Claims

1. A control device (CD) managing outputs of a set of Input/Output modules and implementing a Modbus server communicating according to a Modbus TCP/IP communication protocol with Modbus clients, comprising:
a network interface (NI) configured to receive requests for commanding one or more outputs from the Modbus clients,
a storage unit (SU) configured to store, for each request received from a Modbus client, an IP address of the Modbus client and a number of requests received from said Modbus client,
a processing unit (PU) configured to determine a Modbus client as Modbus master for said one or more outputs when the frequency of requests commanding said one or more outputs, received from said Modbus client, is above a threshold.

2. A control device according to claim 1, wherein the processing unit is configured to switch the Modbus server in fallback mode for managing said one or more outputs when the Modbus server has not received any request during a communication time interval from the Modbus master.

3. A control device according to claim 2, wherein the processing unit is configured to determine the communication time interval depending on an estimated frequency and a minimal number of requests.

4. A control device according to claim 3, wherein the frequency is estimated after said minimal number of requests is received from the Modbus client before the end of a defined time interval.

5. A control device according to claims 3 and 4, wherein the communication time interval corresponds to the period during which said minimal number of requests has been received.

6. A control device according to claim 5, wherein the communication time interval is updated after a defined period or regularly.

7. A control device according to any of previous claims, wherein the threshold depends on the minimal number of requests to be received from the Modbus client during a defined time interval.

8. A control device according to claim 2, wherein the Modbus server in fallback mode allows the processing unit to apply a fallback strategy according to which it can manage itself the outputs, without receiving other requests.

9. A control device according to any of previous claims, wherein the processing unit (PU) is further configured to monitor the outputs covered by the requests, and to assign an identifier of a Modbus client to an identifier of an output, when the Modbus client is determined as Modbus master for this output.

10. A control device according to any of previous claims, wherein the Modbus server is configured to receive requests from a Modbus client through a dedicated socket and to assign a range of outputs to said dedicated socket.

11. A control device according to any of previous claims, wherein a Modbus client is determined as Modbus master for all outputs when the frequency of requests commanding said one or more output received from said Modbus client is higher than the frequency of requests commanding said one or more output received from other Modbus clients.

12. A control device according to any of previous claims, wherein once a Modbus client has been determined as Modbus master for one or more outputs, the processing unit PU provides an access to the Modbus client to a table listing the IP address of the Modbus client, the number of requests received from said Modbus client and a Master tag linked to the identifiers of the outputs covered by the requests.

13. A method implemented in a control device (CD) managing outputs of a set of Input/Output modules and implementing a Modbus server communicating according to a Modbus TCP/IP communication protocol with Modbus clients, the method comprising:
receiving (S1) requests for commanding one or more outputs from the Modbus clients,
storing (S2), for each request received from a Modbus client, an IP address of the Modbus client and a number of requests received from said Modbus client,
determining (S3) a Modbus client as Modbus master for said one or more outputs when the frequency of requests commanding said one or more outputs, received from said Modbus client, is above a threshold.

14. A method according to claim 13, further comprising switching (S4) the Modbus server in fallback mode for managing said one or more outputs when the Modbus server has not received any request during a communication time interval from the Modbus master.

15. A computer-readable medium having embodied thereon a computer program for executing a method for managing outputs of a set of Input/Output modules according to any of claims 13 to 14.

## Patentansprüche

1. Steuervorrichtung (CD), die Ausgaben eines Satzes von Eingabe/Ausgabe-Modulen verwaltet und einen Modbus-Server implementiert, der gemäß einem Modbus-TCP/IP-Kommunikationsprotokoll mit Modbus-Clients kommuniziert, umfassend:
eine Netzwerkschnittstelle (NI), die dazu ausgelegt ist, Anforderungen zum Befehlen einer oder mehrerer Ausgaben von den Modbus-Clients zu empfangen,
eine Speichereinheit (SU), die dazu ausgelegt ist, für jede von einem Modbus-Client empfangene Anforderung eine IP-Adresse des Modbus-Clients und eine Anzahl von Anforderungen zu speichern, die von dem Modbus-Client empfangen werden,
eine Verarbeitungseinheit (PU), die dazu ausgelegt ist, einen Modbus-Client als Modbus-Master für die eine oder die mehreren Ausgaben zu bestimmen, wenn die Häufigkeit von Anforderungen, die die eine oder die mehreren Ausgaben befehlen, die von dem Modbus-Client empfangen werden, über einem Schwellenwert liegt.

2. Steuervorrichtung nach Anspruch 1, wobei die Verarbeitungseinheit dazu ausgelegt ist, den Modbus-Server in einen Fallback-Modus zum Verwalten der einen oder mehreren Ausgaben umzuschalten, wenn der Modbus-Server während eines Kommunikationszeitintervalls keine Anforderung von dem Modbus-Master empfangen hat.

3. Steuervorrichtung nach Anspruch 2, wobei die Verarbeitungseinheit dazu ausgelegt ist, das Kommunikationszeitintervall in Abhängigkeit von einer geschätzten Häufigkeit und einer minimalen Anzahl von Anforderungen zu bestimmen.

4. Steuervorrichtung nach Anspruch 3, wobei die Häufigkeit geschätzt wird, nachdem die minimale Anzahl von Anforderungen von dem Modbus-Client vor dem Ende eines definierten Zeitintervalls empfangen wurde.

5. Steuervorrichtung nach den Ansprüchen 3 und 4, wobei das Kommunikationszeitintervall der Periode entspricht, während der die minimale Anzahl von Anforderungen empfangen wurde.

6. Steuervorrichtung nach Anspruch 5, wobei das Kommunikationszeitintervall nach einer definierten Periode oder regelmäßig aktualisiert wird.

7. Steuervorrichtung nach einem der vorhergehenden Ansprüche, wobei der Schwellenwert von der minimalen Anzahl von Anforderungen abhängt, die von dem Modbus-Client während eines definierten Zeitintervalls empfangen werden sollen.

8. Steuervorrichtung nach Anspruch 2, wobei der Modbus-Server im Fallback-Modus der Verarbeitungseinheit ermöglicht, eine Fallback-Strategie anzuwenden, gemäß der er selbst die Ausgaben verwalten kann, ohne andere Anforderungen zu empfangen.

9. Steuervorrichtung nach einem der vorhergehenden Ansprüche, wobei die Verarbeitungseinheit (PU) ferner dazu ausgelegt ist, die durch die Anforderungen abgedeckten Ausgaben zu überwachen und eine Kennung eines Modbus-Clients einer Kennung einer Ausgabe zuzuweisen, wenn der Modbus-Client als Modbus-Master für diese Ausgabe bestimmt wird.

10. Steuervorrichtung nach einem der vorhergehenden Ansprüche, wobei der Modbus-Server dazu ausgelegt ist, Anforderungen von einem Modbus-Client über einen dedizierten Socket zu empfangen und dem dedizierten Socket einen Bereich von Ausgaben zuzuweisen.

11. Steuervorrichtung nach einem der vorhergehenden Ansprüche, wobei ein Modbus-Client als Modbus-Master für alle Ausgaben bestimmt wird, wenn die Häufigkeit von Anforderungen, die die eine oder die mehreren Ausgaben befehlen, die von dem Modbus-Client empfangen werden, höher ist als die Häufigkeit von Anforderungen, die die eine oder die mehreren Ausgaben befehlen, die von anderen Modbus-Clients empfangen werden.

12. Steuervorrichtung nach einem der vorhergehenden Ansprüche, wobei, sobald ein Modbus-Client als Modbus-Master für eine oder mehrere Ausgaben bestimmt wurde, die Verarbeitungseinheit PU Zugriff für den Modbus-Client auf eine Tabelle bereitstellt, die die IP-Adresse des Modbus-Clients, die Anzahl von Anforderungen, die von dem Modbus-Client empfangen werden, und ein Master-Tag auflistet, das mit den Kennungen der Ausgaben verknüpft ist, die durch die Anforderungen abgedeckt werden.

13. Verfahren, das in einer Steuervorrichtung (CD) implementiert wird, die Ausgaben eines Satzes von Eingabe/Ausgabe-Modulen verwaltet und einen Modbus-Server implementiert, der gemäß einem Modbus-TCP/IP-Kommunikationsprotokoll mit Modbus-Clients kommuniziert, wobei das Verfahren Folgendes umfasst:
Empfangen (S1) von Anforderungen zum Befehlen einer oder mehrerer Ausgaben von den Modbus-Clients,
Speichern (S2) einer IP-Adresse eines Modbus-Clients und eine Anzahl von Anforderungen, die von dem Modbus-Client empfangen werden, für jede von dem Modbus-Client empfangene Anforderung,
Bestimmen (S3) eines Modbus-Clients als Modbus-Master für die eine oder die mehreren Ausgaben, wenn die Häufigkeit von Anforderungen, die die eine oder die mehreren Ausgaben befehlen, die von dem Modbus-Client empfangen werden, über einem Schwellenwert liegt.

14. Verfahren nach Anspruch 13, ferner umfassend Umschalten (S4) des Modbus-Servers in einen Fallback-Modus zum Verwalten der einen oder mehreren Ausgaben, wenn der Modbus-Server während eines Kommunikationszeitintervalls keine Anforderung von dem Modbus-Master empfangen hat.

15. Computerlesbares Medium, in dem ein Computerprogramm zum Ausführen eines Verfahrens zum Verwalten eines Satzes von Eingabe/Ausgabe-Modulen nach einem der Ansprüche 13 bis 14 enthalten ist.

## Revendications

1. Dispositif de commande (CD) gérant les sorties d'un ensemble de modules d'entrée/sortie et mettant en œuvre un serveur Modbus communiquant selon un protocole de communication Modbus TCP/IP avec des clients Modbus, le dispositif comprenant :
une interface réseau (NI) configurée pour recevoir des demandes de commande d'une ou plusieurs sorties des clients Modbus,
une unité de stockage (SU) configurée pour stocker, pour chaque demande reçue d'un client Modbus, une adresse IP du client Modbus et un certain nombre de demandes reçues dudit client Modbus,
une unité de traitement (PU) configurée pour déterminer un client Modbus comme Modbus maître pour lesdites une ou plusieurs sorties lorsque la fréquence des demandes commandant lesdites une ou plusieurs sorties, reçues dudit client Modbus, est supérieure à un seuil.

2. Dispositif de commande selon la revendication 1, dans lequel l'unité de traitement est configurée pour commuter le serveur Modbus en mode de repli pour gérer lesdites une ou plusieurs sorties lorsque le serveur Modbus n'a reçu aucune demande pendant un certain intervalle de temps de communication de la part du Modbus maître.

3. Dispositif de commande selon la revendication 2, dans lequel l'unité de traitement est configurée pour déterminer l'intervalle de temps de communication en fonction d'une fréquence estimée et d'un nombre minimal de demandes.

4. Dispositif de commande selon la revendication 3, dans lequel la fréquence est estimée après que ledit nombre minimal de demandes a été reçu du client Modbus avant la fin d'un intervalle de temps défini.

5. Dispositif de commande selon les revendications 3 et 4, dans lequel l'intervalle de temps de communication correspond à la période pendant laquelle ledit nombre minimal de demandes a été reçu.

6. Dispositif de commande selon la revendication 5, dans lequel l'intervalle de temps de communication est mis à jour après une période définie ou de manière régulière.

7. Dispositif de commande selon l'une quelconque des revendications précédentes, dans lequel le seuil dépend du nombre minimal de demandes à recevoir du client Modbus pendant un intervalle de temps défini.

8. Dispositif de commande selon la revendication 2, dans lequel le serveur Modbus en mode de repli permet à l'unité de traitement d'appliquer une stratégie de repli selon laquelle elle peut gérer elle-même les sorties, sans recevoir d'autres demandes.

9. Dispositif de commande selon l'une quelconque des revendications précédentes, dans lequel l'unité de traitement (PU) est en outre configurée pour surveiller les sorties couvertes par les demandes, et pour affecter un identifiant d'un client Modbus à un identifiant d'une sortie, lorsque le client Modbus est déterminé comme Modbus maître pour cette sortie.

10. Dispositif de commande selon l'une quelconque des revendications précédentes, dans lequel le serveur Modbus est configuré pour recevoir des demandes d'un client Modbus par l'intermédiaire d'une prise dédiée et pour attribuer une plage de sorties à ladite prise dédiée.

11. Dispositif de commande selon l'une quelconque des revendications précédentes, dans lequel un client Modbus est déterminé comme Modbus maître pour toutes les sorties lorsque la fréquence des demandes commandant lesdites une ou plusieurs sorties reçues dudit client Modbus est supérieure à la fréquence des demandes commandant lesdites une ou plusieurs sorties reçues d'autres clients Modbus.

12. Dispositif de commande selon l'une quelconque des revendications précédentes, dans lequel, une fois qu'un client Modbus a été déterminé comme Modbus maître pour une ou plusieurs sorties, l'unité de traitement PU fournit un accès au client Modbus à une table listant l'adresse IP du client Modbus, le nombre de demandes reçues dudit client Modbus et une étiquette maîtresse liée aux identifiants des sorties couvertes par les demandes.

13. Procédé mis en œuvre dans un dispositif de commande (CD) gérant les sorties d'un ensemble de modules d'entrée/sortie et mettant en œuvre un serveur Modbus communiquant selon un protocole de communication Modbus TCP/IP avec des clients Modbus, le procédé comprenant les étapes suivantes :
recevoir (S1) des demandes de commande d'une ou plusieurs sorties des clients Modbus,
stocker (S2), pour chaque demande reçue d'un client Modbus, une adresse IP du client Modbus et un nombre de demandes reçues dudit client Modbus,
déterminer (S3) un client Modbus comme Modbus maître pour lesdites une ou plusieurs sorties lorsque la fréquence des demandes commandant lesdites une ou plusieurs sorties, reçues dudit client Modbus, est supérieure à un seuil.

14. Procédé selon la revendication 13, comprenant en outre de commuter (S4) le serveur Modbus en mode de repli pour gérer lesdites une ou plusieurs sorties lorsque le serveur Modbus n'a reçu aucune demande pendant un certain intervalle de temps de communication de la part du Modbus maître.

15. Support lisible par ordinateur comprenant un programme informatique destiné à exécuter un procédé de gestion des sorties d'un ensemble de modules d'entrée/sortie selon l'une quelconque des revendications 13 et 14.
